(19) Europäisches Patentamt / European Patent Office / Office européen des brevets

(11) **EP 2 656 010 B1**

(12) **FASCICULE DE BREVET EUROPEEN**

(45) Date de publication et mention
de la délivrance du brevet:
**24.06.2015 Bulletin 2015/26**

(21) Numéro de dépôt: **11817401.0**

(22) Date de dépôt: **20.12.2011**

(51) Int Cl.:
***G01C 22/00*** *(2006.01)*

(86) Numéro de dépôt international:
**PCT/FR2011/053064**

(87) Numéro de publication internationale:
**WO 2012/085435 (28.06.2012 Gazette 2012/26)**

(54) **PROCEDE D'ESTIMATION DE LA DISTANCE PARCOURUE PAR UN INDIVIDU ET DISPOSITIF DE MESURE ASSOCIE**

VERFAHREN ZUR SCHÄTZUNG DER ZURÜCKGELEGTEN WEGSTRECKE EINER PERSON UND ZUGEHÖRIGE MESSVORRICHTUNG

METHOD OF ESTIMATING THE DISTANCE TRAVELLED BY AN INDIVIDUAL AND ASSOCIATED MEASUREMENT DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2010 FR 1061036**

(43) Date de publication de la demande:
**30.10.2013 Bulletin 2013/44**

(73) Titulaire: **Decathlon**
**59650 Villeneuve D'ascq (FR)**

(72) Inventeur: **MORIO, Cédric**
**59170 CROIX (FR)**

(74) Mandataire: **Balesta, Pierre**
**Cabinet Beau de Loménie**
**Immeuble Eurocentre**
**179 Boulevard de Turin**
**59777 Lille (FR)**

(56) Documents cités:
**US-A1- 2008 249 740**

• **DELATTRE N ET AL: "Dynamic similarity during human running: About Froude and Strouhal dimensionless numbers", JOURNAL OF BIOMECHANICS, PERGAMON PRESS, NEW YORK, NY, US, vol. 42, no. 3, 9 février 2009 (2009-02-09), pages 312-318, XP025923301, ISSN: 0021-9290, DOI: DOI:10.1016/J.JBIOMECH. 2008.11.010 [extrait le 2009-01-03]**

**Description**

Domaine technique

L'objet de la présente invention se situe dans le domaine des dispositifs de mesure, et notamment dans le domaine des dispositifs de mesure de type par exemple podomètre.

Plus précisément, l'objet de la présente invention vise un procédé d'estimation, à l'aide d'un dispositif de mesure, de la distance réellement parcourue par un individu pendant une période de temps déterminée.

Par dispositif de mesure au sens de la présente invention, on entend dans toute la présente description qui suit tous types de dispositif aptes à compter le nombre de pas. Parmi les dispositifs de mesure au sens de la présente invention, on recense notamment les podomètres dits classiques, les « step-watch » et les systèmes de mesure dits « speed & distance », ou encore les clés USB-podomètre.

Etat de la technique

Les podomètres de l'état de la technique sont adaptés pour permettre d'estimer la distance réellement parcourue par un individu pendant une période de temps déterminée.

Généralement, cette distance parcourue est calculée selon la formule suivante: *Distance parcourue = longueur de pas x fréquence de marche x temps de marche*

Selon la formule ci-dessus, pour pouvoir estimer de façon précise la distance parcourue, le podomètre doit connaître la valeur relative à la longueur de pas.

Par défaut, sur une certaine catégorie de podomètres d'entrée de gamme, cette valeur est égale à une longueur fixe: 1 mètre par exemple.

Un tel paramétrage en usine implique inévitablement une estimation très approximative de la distance réellement parcourue par l'utilisateur. Ce manque de précision n'est pas acceptable pour un utilisateur qui souhaite avoir une information précise relativement à son activité physique.

En effet, avec une telle technologie, deux personnes qui font une activité physique ensemble et qui parcourent une même distance se verront attribuer par leur podomètre respectif une distance qui peut être très différente d'un utilisateur à l'autre, ceci est d'autant plus vraie s'il s'agit d'un homme et d'une femme qui marchent ensemble et qui ont a priori une longueur de pas différente.

Sur d'autres podomètres, censés être plus perfectionnés, l'utilisateur doit renseigner préalablement à son utilisation sa longueur de pas.

Toutefois, l'utilisateur n'a généralement aucune idée précise de cette valeur. En effet, un utilisateur classique ne connaît pas la longueur réelle de ses pas. Cette information semble en effet difficilement appréciable pour un utilisateur quelconque.

Il existe dans l'état de la technique une solution pour calibrer de façon précise son podomètre en sorte d'estimer cette longueur de pas.

Cette solution consiste tout d'abord à mesurer une distance, par exemple une distance de 10 mètres. Il faut ensuite parcourir cette distance à pieds, et compter le nombre de pas effectués lors de ce parcours, par exemple 14 pas. Enfin, il faut faire la division de la distance parcourue par rapport au nombre de pas réellement effectués sur cette distance.

Avec les valeurs retenues ci-dessus à titre d'exemple, la valeur de la longueur de pas estimée par ce procédé est égale à : 10/14 = 0,71, soit une longueur de pas estimée être égale à 71 centimètres.

La demanderesse soumet toutefois que ce procédé de calibration est très fastidieux, et peut entraîner des erreurs dues notamment au comptage du nombre de pas, à l'évaluation de la distance de référence, ou encore à la faible longueur de la distance parcourue.

De plus, les utilisateurs ne prennent généralement pas le temps de faire une telle manipulation. La demanderesse constate que, bien souvent, les utilisateurs conservent la valeur du paramétrage par défaut.

Il existe également des solutions dites intelligentes visant à améliorer cette valeur relative à l'estimation de la longueur de pas.

De telles solutions sont divulguées notamment dans les documents JP2008191046 et JP2008191047.

Dans ces documents, il est proposé une solution dans laquelle l'utilisateur renseigne dès qu'il la connaît la valeur de la distance parcourue.

Grâce à cette valeur connue, le podomètre va être capable de recalculer la longueur de pas pour améliorer la prédiction au fur et à mesure que l'utilisateur utilise son podomètre.

Cette solution qui repose sur le même principe que celui exposé ci-dessus nécessite la saisie systématique par l'utilisateur de la distance parcourue, bien évidemment lorsque celle-ci est connue.

Cette solution intelligente ne permet donc qu'une estimation de la valeur de la longueur de pas par apprentissage. En tout état de cause, elle ne permet pas une seule et unique calibration.

La demanderesse soumet qu'il existe également des solutions complexes visant à déterminer la longueur de pas en fonction de paramètres physiologiques qui sont mesurés, et qui nécessitent des manipulations et un appareillage complexes ; ces solutions sont connues notamment du document WO 2005/0800917.

La demanderesse observe par ailleurs que la longueur de pas peut varier en fonction de l'activité physique de son utilisateur : la longueur de pas d'un utilisateur va être différente si ce dernier marche, court à allure modérée, court à allure soutenue, ou sprinte.

L'intensité de l'activité physique et plus précisément les seuils de niveaux de marche apparaissent donc être des facteurs particulièrement pertinents si on souhaite obtenir une estimation précise de cette distance parcourue.

A titre d'exemple, en prenant en considération le facteur relatif à l'activité physique réellement fournie, pour une distance identique parcourue par deux personnes ayant sensiblement la même longueur de jambe, les résultats de l'estimation de la distance parcourue fournis par le podomètre ne sont pas les mêmes si la première personne marche et si la deuxième personne court.

A titre d'exemple, si l'on considère un même individu A de stature normale, 1,70 mètres, marchant à une vitesse v1 de 1 mètre par seconde, soit 3,6 kilomètres par heure, ou marchant à une vitesse v2 de 3 mètres par seconde, soit 10,8 kilomètres par heure, la même distance ne sera pas parcourue pour un même nombre de pas selon ces deux vitesses v1 et v2.

En effet, si cet individu effectue 100 pas à la vitesse v1, il aura parcouru environ 66 mètres ; alors que s'il effectue 100 pas à la vitesse v2, il aura parcouru environ 102 mètres.

Cet exemple permet d'illustrer de façon chiffrée qu'il existe une relation significative entre la vitesse de marche, la fréquence de marche et la longueur du pas.

La simple calibration du podomètre consistant à renseigner la longueur de pas de l'utilisateur ne suffit donc pas à permettre de déterminer de façon précise la distance réellement parcourue.

On comprend donc qu'il nécessaire de pouvoir estimer de façon dynamique la longueur de pas si on cherche à avoir une estimation précise de la distance réellement parcourue en fonction de l'intensité de l'activité physique.

En tout état de cause, la demanderesse observe un défaut manifeste en matière de procédé d'estimation de la distance réellement parcourue.

La demanderesse considère que les différents enseignements proposés dans l'état de la technique ne proposent pas de solutions satisfaisantes permettant une utilisation simple du podomètre permettant la fourniture d'une estimation précise de la distance parcourue en fonction notamment de l'intensité de l'activité physique de l'utilisateur, et notamment en tenant compte des seuils de marche.

Résumé de l'objet de la présente invention

L'objet de la présente invention est d'apporter une solution simple et efficace aux problèmes précités parmi d'autres problèmes, les problèmes liés aux coûts et à la fabrication étant bien évidemment pris en considération dans l'objet de la présente invention.

Un des problèmes techniques que résout l'objet de la présente invention consiste donc à proposer une solution visant une estimation dynamique et précise de la distance réellement parcourue par un individu pendant une période de temps déterminé, ceci en prenant notamment en considération les niveaux ou les types de marche.

A cet effet, l'objet de la présente invention porte sur un procédé d'estimation de la distance réellement parcourue par un individu pendant une période de temps.

On considère ici de façon implicite que l'individu a une longueur de pas déterminée qui est connue ou non.

Avantageusement, le procédé selon la présente invention est apte à être mis en oeuvre par un dispositif de mesure de type par exemple podomètre.

Le procédé d'estimation selon la présente invention comporte une étape de mesure consistant à mesurer de façon classique le nombre de pas effectués par l'individu pendant la période de temps.

Avantageusement, préalablement à l'étape de mesure, le procédé d'estimation selon la présente invention comporte :

- une étape de saisie consistant notamment à saisir au moins une donnée physiologique comportant une information relative à la stature de l'individu (de préférence cette information est connue), et
- une première étape de calcul consistant à calculer la fréquence de marche naturelle de l'individu en fonction notamment du nombre de Froude $N_{Fr}$ et de la donnée physiologique saisie.

Avantageusement, suite à l'étape de mesure, le procédé d'estimation selon la présente invention comporte :

- une deuxième étape de calcul consistant à calculer une estimation de la distance réellement parcourue par l'individu pendant la période de temps en fonction notamment du nombre de pas mesuré, de la fréquence de marche naturelle calculée, et de la longueur de pas de l'individu.

Avantageusement, la fréquence de marche naturelle, notée ici *Fréq_naturelle,* qui est calculée lors de la première étape de calcul, est obtenue selon la formule suivante :

$$Fréq\_naturelle = \frac{\sqrt{g \times N_{Fr} \times m \times DATA}}{L\_pas}$$

Dans cette formule, *DATA* est la donnée physiologique saisie, *g* est la constant gravitationnelle, la variable *m* est un nombre compris sensiblement entre 0,53 et 0,54, et *L_pas* correspond à la longueur de pas de l'individu.

De préférence, le nombre de Froude $N_{Fr}$ est sensiblement égal à de l'ordre de 0,25.

Dans une variante de réalisation de la présente invention, la longueur de pas de l'individu, lorsque ce dernier marche selon une marche dite normale ou naturelle, n'est pas connue.

Dans cette variante, le procédé d'estimation selon la présente invention comporte avantageusement, préalablement à l'étape de mesure, une étape de calibration du dispositif de mesure consistant à calculer la longueur de pas de l'individu selon la formule suivante :

$$L\_pas = (0,4389 \pm \varepsilon1) \times DATA + (0.0246 \pm \varepsilon2)$$

Dans cette formule, *DATA* est la donnée physiologique saisie, $\varepsilon1$ est un premier indice de tolérance, et $\varepsilon2$ est un deuxième indice de tolérance.

De préférence, le premier indice de tolérance $\varepsilon1$ est sensiblement inférieur ou égal à 0,026 et le deuxième indice de tolérance $\varepsilon2$ est sensiblement inférieur ou égal à 0,0588.

Dans une autre variante de réalisation de la présente invention, la longueur de pas de l'individu, lorsque ce dernier marche selon une marche dite normale ou naturelle, est connue.

Dans cette variante, la longueur de pas est saisie lors de l'étape de saisie.

Cette saisie est manuelle, ou peut être vocale. Bien évidemment, tout autre type de saisie peut être envisagé dans le cadre de la présente invention.

Avantageusement, l'estimation de la distance réellement parcourue par ledit individu pendant la période de temps T, notée ici *dist_est,* est obtenue par la formule suivante :

$$dist\_est = Nb\_pas \times \left(L\_pas + (k \pm \varepsilon3) \times \left[\frac{Nb\_pas}{T} - Fréq\_naturelle\right]\right)$$

Dans cette formule, *Nb_pas* est la variable relative au nombre de pas mesurés, *k* est un coefficient sensiblement égal à de l'ordre 0,251, et $\varepsilon3$ est un troisième indice de tolérance.

De préférence, le troisième indice de tolérance $\varepsilon3$ est sensiblement inférieur ou égal à de l'ordre de 0,0025.

Corrélativement, l'objet de la présente invention porte sur un programme d'ordinateur comportant des instructions adaptées pour l'exécution des étapes du procédé d'estimation tel que décrit ci-dessus, notamment lorsque ledit programme est exécuté par un ordinateur ou tout autre système équivalent.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

De même, l'objet de la présente invention porte sur un support d'enregistrement lisible par un ordinateur ou tout autre système équivalent, sur lequel est enregistré un programme d'ordinateur comprenant des instructions pour l'exécution des étapes du procédé d'estimation selon la présente invention.

D'une part, le support d'enregistrement peut être n'importe quel entité ou dispositif capable de stocker le programme. Par exemple, le support peut comporter un moyen de stockage, tel qu'une mémoire ROM, par exemple un CD-ROM ou une mémoire ROM de type circuit microélectronique, ou encore un moyen d'enregistrement magnétique, par exemple une disquette de type « floppy disc » ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

L'objet de la présente invention porte également sur un dispositif de mesure de type par exemple podomètre apte à estimer la distance réellement parcourue par un individu ayant une longueur de pas déterminé, et ce pendant une période de temps déterminée.

Avantageusement, le dispositif de mesure selon la présente invention comporte un module d'estimation comprenant un moyen de mesure configuré pour mesurer le nombre de pas effectués par l'individu pendant cette période de temps.

Le dispositif de mesure selon la présente invention comporte en outre un module de calibration comprenant :

- un moyen de saisie configuré notamment pour saisir au moins une donnée physiologique comportant une information relative à la stature de l'individu (de préférence cette information est connue), et
- un premier moyen de calcul configuré pour calculer la fréquence de marche naturelle de l'individu en fonction notamment du nombre de Froude $N_{Fr}$ et de la donnée physiologique saisie.

Le module d'estimation comporte en outre un deuxième moyen de calcul configuré pour calculer une estimation de la distance réellement parcourue par l'individu pendant la période de temps en fonction notamment du nombre de pas mesuré, de la fréquence de marche naturelle calculée, et de la longueur de pas de l'individu.

Avantageusement, le premier moyen de calcul est configuré pour calculer la fréquence de marche naturelle, notée ici *Fréq_naturelle,* selon la formule suivante :

$$Fréq\_naturelle = \frac{\sqrt{g \times N_{Fr} \times m \times DATA}}{L\_pas}$$

Dans cette formule, *DATA* est la donnée physiologique saisie, *g* est la constant gravitationnelle, la variable *m* est un nombre compris sensiblement entre 0,53 et 0,54, et *L_ pas* est la valeur correspondant à la longueur de pas de l'individu.

De préférence, le nombre de Froude $N_{Fr}$ est sensiblement égal à de l'ordre de 0,25.

Dans une variante de réalisation de la présente invention, la longueur de pas de l'individu, lorsque ce dernier marche selon une marche dite normale ou naturelle, n'est pas connue.

Dans cette variante, le module de calibration comporte avantageusement un troisième moyen de calcul configuré pour calculer la longueur de pas de l'individu selon la formule suivante :

$$L\_pas = (0{,}4389 \pm \varepsilon 1) \times DATA + (0.0246 \pm \varepsilon 2)$$

Dans cette formule, *DATA* est la donnée physiologique saisie, $\varepsilon 1$ est un premier indice de tolérance, et $\varepsilon 2$ est un deuxième indice de tolérance.

De préférence, le premier indice de tolérance $\varepsilon 1$ est sensiblement inférieur ou égal à 0,026 et le deuxième indice de tolérance $\varepsilon 2$ est sensiblement inférieur ou égal à 0,0588.

Dans une autre variante de réalisation de la présente invention, la longueur de pas de l'individu, lorsque ce dernier marche selon une marche dite normale ou naturelle, est connue par l'individu.

Dans cette autre variante, le moyen de saisie est configuré pour saisir la longueur de pas.

Le moyen de saisie peut être un moyen de saisie de type clavier ou pavé tactile lorsque la saisie est manuelle.

Alternativement, la saisie peut également être vocale ; dans ce cas, le moyen de saisie est adapté à cet effet. Bien évidemment, tout autre type de saisie peut être envisagé dans le cadre de la présente invention

Avantageusement, le deuxième moyen de calcul est configuré pour calculer l'estimation de la distance réellement parcourue par l'individu pendant la période de temps T selon la formule suivante :

$$dist\_est = Nb\_pas \times \left( L\_pas + (k \pm \varepsilon 3) \times \left[ \frac{Nb\_pas}{T} - Fréq\_naturelle \right] \right)$$

Dans cette formule, $Nb\_pas$ est la variable relative au nombre de pas mesurés, $L\_pas$ est la variable correspondant à la longueur de pas de l'individu (saisie ou estimée), $k$ est un coefficient sensiblement égal à de l'ordre 0,251, et ε3 est un troisième indice de tolérance.

De préférence, le troisième indice de tolérance ε3 est sensiblement inférieur ou égal à de l'ordre de 0,0025.

Avantageusement, le dispositif de mesure selon la présente invention comporte un support d'enregistrement tel que décrit ci-dessus, lisible par le dispositif de mesure et sur lequel est enregistré un programme d'ordinateur comprenant des instructions pour l'exécution des étapes du procédé d'estimation tel que décrit ci-dessus.

Ainsi, l'objet de la présente invention par ses différents aspects fonctionnels, ses caractéristiques avantageuses, et les différents algorithmes mis en oeuvre, pallie aux différents inconvénients relevés dans l'état de la technique en permettant :

a) d'une part une estimation précise de la distance réellement parcourue par un individu sur une période de temps déterminée en fonction notamment de son activité physique, et plus précisément en fonction des niveaux ou seuils de marche, et

b) d'autre part, selon une variante avantageuse, une calibration automatique et précise du dispositif de mesure grâce à l'unique saisie d'une donnée physiologique comportant une information relative à la physiologie de l'individu, cette information étant a priori connue par ledit individu. Brève description des figures

D'autres caractéristiques et avantages de la présente invention ressortiront de la description ci-dessous, en référence aux figures 1 à 2 annexées qui en illustrent un exemple de réalisation dépourvu de tout caractère limitatif et sur lesquelles :

- la figure 1 représente une vue schématique d'un dispositif de mesure apte à mettre en oeuvre les étapes du procédé d'estimation selon un exemple de réalisation particulier de la présente invention ; et
- la figure 2 est un organigramme représentant de façon schématique les différentes étapes du procédé d'estimation selon un exemple de réalisation particulier de la présente invention.

Description détaillée d'un exemple de réalisation de la présente invention

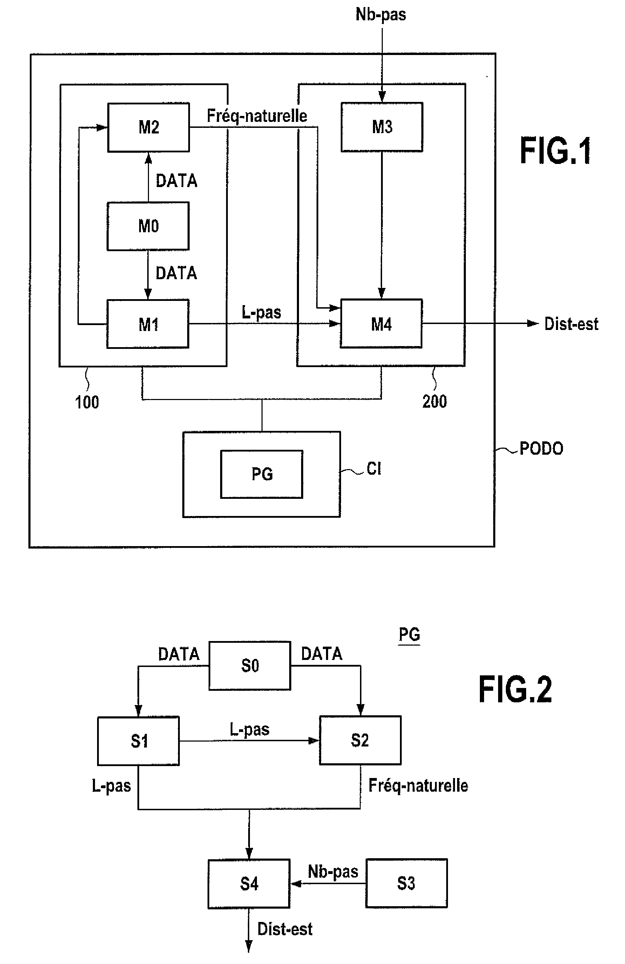

Un procédé d'estimation et un dispositif de mesure conformes à un exemple de réalisation particulier de la présente invention vont maintenant être décrits conjointement en référence aux figures 1 à 2.

Permettre une estimation précise de la distance réellement parcourue par un individu pendant une période de temps T déterminée est un des objectifs de la présente invention.

Permettre une individualisation des seuils ou des niveaux de marche d'un individu pour estimer et calculer la distance réellement parcourue est également un des objectifs de la présente invention.

Dans l'exemple décrit ici, l'objet de la présente invention concerne un procédé d'estimation apte à être mis en oeuvre par un dispositif de mesure PODO tel qu'un podomètre spécialement adapté à cet effet.

Dans la présente description qui suit, de façon non limitative, l'exemple d'un podomètre PODO est décrit.

Grâce au podomètre PODO selon la présente invention, l'utilisateur peut, lors d'une étape de saisie S0, et en utilisant le moyen de saisie M0 du module de calibration 100, saisir une donnée physiologique $DATA$ comportant une information connue relative à sa stature.

Il faut entendre par stature au sens de la présente invention la définition anthropomorphique du terme, à savoir la hauteur ou la taille de l'utilisateur.

L'utilisateur peut également saisir, à d'autres fins, d'autres données physiologiques telles que son poids, son âge, son sexe, etc., ceci afin de pouvoir par exemple calculer l'énergie calorifique dépensée sur la période d'effort et/ou sur la journée.

Dans l'exemple de réalisation décrit ici, le module de calibration 100 du podomètre PODO selon la présente invention comporte également un premier moyen de calcul M2 qui est configuré pour calculer, lors d'une première étape de calcul S2, la fréquence de marche naturelle $Fréq\_naturelle$ en fonction notamment du nombre de Froude $N_{Fr}$ et de la donnée physiologique $DATA$.

Dans l'exemple de réalisation décrit ici, le nombre de Froude $N_{Fr}$ est sensiblement égal à de l'ordre de 0,25.

Calculer la fréquence de marche naturelle $Fréq\_naturelle$ en fonction du nombre de Froude $N_{Fr}$ est caractéristique de la présente invention.

Ce calcul permet de déterminer de façon précise le seuil de marche ; c'est-à-dire le seuil permettant de distinguer un niveau de marche naturelle d'un niveau de marche dit soutenue (par exemple).

On peut noter ici que le nombre de Froude est un nombre adimensionnel qui caractérise dans un fluide l'importance relative des forces liées à la vitesse et à la force de pesanteur. Ce nombre apparaît essentiellement dans les phénomènes à surface libre, et est utilisé en particulier dans les études de cours d'eau ou dans les constructions navales.

La demanderesse soumet que ce nombre n'a jamais été utilisé dans les différentes technologies relatives aux podomètres, et aux dispositifs de mesure en général.

Dans l'exemple de réalisation décrit ici, la fréquence de marche naturelle *Fréq_naturelle* est calculée selon la formule suivante :

$$Fréq\_naturelle = \frac{\sqrt{g \times N_{Fr} \times m \times DATA}}{L\_pas}$$

Dans cette formule, *g* est la constante gravitationnelle, la variable *m* est un nombre compris sensiblement entre 0,53 et 0,54.

Plus précisément, dans l'exemple décrit ici, la fréquence de marche naturelle est obtenue selon la formule suivante :

$$Fréq\_naturelle = \frac{\sqrt{g \times 0.25 \times m \times DATA}}{L\_pas}$$

Dans une première variante de réalisation, la longueur de pas *L_pas* peut ne pas être connue, ce qui est généralement le cas.

Dans ce cas, avantageusement, le module de calibration 100 selon la présente invention comporte un troisième moyen de calcul M2 configuré pour calculer, lors d'une troisième étape de calcul S2, la longueur de pas de l'individu selon la formule suivante :

$$L\_pas = (0,4389 \pm \varepsilon 1) \times DATA + (0.0246 \pm \varepsilon 2)$$

Dans cette formule, $\varepsilon 1$ est un premier indice de tolérance qui de préférence est sensiblement inférieur ou égal à 0,026, et $\varepsilon 2$ est un deuxième indice de tolérance qui de préférence est sensiblement inférieur ou égal à 0,0588.

Dans ce cas, la fréquence de marche naturelle est obtenue selon la formule suivante :

$$Fréq\_naturelle = \frac{\sqrt{g \times 0.25 \times m \times DATA}}{(0,4389 \pm \varepsilon 1) \times DATA + (0.0246 \pm \varepsilon 2)}$$

Dans une autre variante de réalisation, la longueur de pas *L_pas* est connue, et est saisie par l'utilisateur lors de l'étape de saisie S0.

Lors de l'utilisation, le podomètre PODO comporte un moyen de mesure M3 configuré pour mesurer, lors d'une étape de mesure S3, le nombre de pas *Nb_pas* effectués pendant la période de temps *T*.

Ce moyen M3 peut être tout type de capteur pouvant détecter un changement cinématique relatif du système comme par exemple les technologies classiques des podomètres dites « marteau » ou des moyens d'analyse du mouvement relatif comme les technologies piézoélectriques, accélérométriques, magnétométriques, ou gyrométriques.

Dans l'exemple de réalisation décrit ici, le podomètre PODO selon la présente invention comporte en outre un module d'estimation 200 qui comprend un deuxième moyen de calcul M4 configuré pour calculer, lors d'une deuxième étape de calcul S4, une estimation *dist_est* de la distance réellement parcourue par l'individu pendant la période de temps *T* en fonction notamment du nombre de pas mesuré *Nb_pas,* de la fréquence de marche naturelle calculée *Fréq_naturelle,* et de la longueur de pas *L_pas* dudit individu mesurée ou saisie.

Avantageusement, l'estimation *dist_est* de la distance est obtenue par la formule suivante :

$$dist\_est = Nb\_pas \times (L\_pas + (k \pm \varepsilon 3) \times \left[ \frac{Nb\_pas}{T} - Fréq\_naturelle \right])$$

Dans cette formule, *k* est un coefficient sensiblement égal à de l'ordre 0,251, et ε3 est un troisième indice de tolérance qui de préférence est sensiblement inférieur ou égal à de l'ordre de 0,0025.

On note que la division $\dfrac{Nb\_pas}{T}$ correspond à la fréquence de marche réelle.

Dès lors, le résultat de la différence entre cette fréquence de marche réelle et la fréquence de marche naturelle permet d'établir si l'utilisateur marche de façon naturelle ou si ce dernier marche ou court.

Le podomètre PODO selon la présente invention comporte également un support d'enregistrement CI lisible par le podomètre PODO et sur lequel est enregistré un programme d'ordinateur PG comprenant des instructions pour l'exécution des étapes du procédé d'estimation tel que décrit ci-dessus.

L'objet de la présente invention permet donc une estimation de la longueur de pas précise en tenant compte des seuils de marche ou des niveaux de marche, et éventuellement par une simplification et une automatisation de la calibration du dispositif de mesure.

Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

**Revendications**

1. Procédé d'estimation de la distance réellement parcourue par un individu ayant une longueur de pas (*L_pas*) pendant une période de temps (*T*), ledit procédé étant mis en oeuvre par un dispositif de mesure (PODO) de type par exemple podomètre et comportant une étape de mesure (S3) consistant à mesurer le nombre de pas (*Nb_ pas*) effectués par ledit individu pendant la période de temps *(T)*, **caractérisé en ce qu'**il comporte préalablement à l'étape de mesure (S3) :

   - une étape de saisie (S0) consistant notamment à saisir au moins une donnée physiologique (*DATA*) comportant une information connue relative à la stature dudit individu, et
   - une première étape de calcul (S2) consistant à calculer la fréquence de marche naturelle (*Fréq_naturelle*) dudit individu en fonction notamment du nombre de Froude $N_{Fr}$ et de la donnée physiologique *(DATA),*

   et **en ce qu'**il comporte en outre suite à l'étape de mesure (S3) :

   - une deuxième étape de calcul (S4) consistant à calculer une estimation (*dist_est*) de la distance réellement parcourue par ledit individu pendant la période de temps (*T*) en fonction notamment du nombre de pas mesuré (*Nb_pas*), de la fréquence de marche naturelle calculée (*Fréq_naturelle*), et de la longueur de pas (*L_pas*) dudit individu.

2. Procédé d'estimation selon la revendication 1, **caractérisé en ce que** la fréquence de marche naturelle (*Fréq_naturelle*) calculée lors de la première étape de calcul (S2) est obtenue par la formule suivante :

$$Fréq\_naturelle = \frac{\sqrt{g \times N_{Fr} \times m \times DATA}}{L\_pas}$$

   dans laquelle la variable *g* est la constant gravitationnelle, et la variable *m* est un nombre compris sensiblement entre 0,53 et 0,54.

3. Procédé d'estimation selon l'une quelconque des revendications 1 ou 2, **caractérisé en ce que** le nombre de Froude $N_{Fr}$ est sensiblement égal à de l'ordre de 0,25.

4. Procédé d'estimation selon l'une quelconque des revendications précédentes, **caractérisé en ce qu'**il comporte, préalablement à l'étape de mesure (S3), une étape de calibration (S2) consistant à calculer la longueur de pas (*L_pas*) de l'individu selon la formule suivante :

$$L\_pas = (0{,}4389 \pm \varepsilon 1) \times DATA + (0.0246 \pm \varepsilon 2)$$

dans laquelle ε1 est un premier indice de tolérance, et ε2 est un deuxième indice de tolérance.

**5.** Procédé d'estimation selon la revendication 4, **caractérisé en ce que** le premier indice de tolérance ε1 est sensiblement inférieur ou égal à 0,026 et le deuxième indice de tolérance ε2 est sensiblement inférieur ou égal à 0,0588.

**6.** Procédé d'estimation selon l'une quelconque des revendications 1 à 3, **caractérisé en ce que** la longueur de pas (*L_pas*) est saisie lors de l'étape de saisie (S0).

**7.** Procédé d'estimation selon l'une quelconque des revendications précédentes, **caractérisé en ce que** l'estimation (*dist_est*) de la distance réellement parcourue par ledit individu pendant la période de temps (*T*) est obtenue par la formule suivante :

$$dist\_est = Nb\_pas \times \left( L\_pas + (k \pm \varepsilon 3) \times \left[ \frac{Nb\_pas}{T} - Fréq\_naturelle \right] \right)$$

dans laquelle *k* est un coefficient sensiblement égal à de l'ordre 0,251, et ε3 est un troisième indice de tolérance.

**8.** Procédé d'estimation selon la revendication 7, **caractérisé en ce que** le troisième indice de tolérance ε3 est sensiblement inférieur ou égal à de l'ordre de 0,0025.

**9.** Support d'enregistrement (CI) lisible par un ordinateur ou sur un dispositif de mesure (PODO) du type podomètre et sur lequel est enregistré un programme d'ordinateur (PG) comprenant des instructions pour l'exécution des étapes du procédé d'estimation selon l'une quelconque des revendications 1 à 8.

**10.** Dispositif de mesure (PODO) de type par exemple podomètre apte à estimer la distance réellement parcourue par un individu ayant une longueur de pas (*L_pas*) pendant une période de temps (*T*), ledit dispositif de mesure (PODO) comportant un module d'estimation (200) comportant un moyen de mesure (M3) configuré pour mesurer le nombre de pas (*Nb_pas*) effectués par ledit individu pendant la période de temps (*T*), **caractérisé en ce qu'**il comporte un module de calibration (100) comprenant :

- un moyen de saisie (M0) configuré notamment pour saisir au moins une donnée physiologique (*DATA*) comportant une information relative à la stature dudit individu, et
- un premier moyen de calcul (M2) configuré pour calculer la fréquence de marche naturelle (*Fréq_naturelle*) dudit individu en fonction notamment du nombre de Froude $N_{Fr}$ et de la donnée physiologique *(DATA),*

et **en ce que** le module d'estimation (200) comporte en outre :

- un deuxième moyen de calcul (M4) configuré pour calculer une estimation (*dist_est*) de la distance réellement parcourue par ledit individu pendant la période de temps (*T*) en fonction notamment du nombre de pas mesuré (*Nb_pas*), de la fréquence de marche naturelle calculée (*Fréq_naturelle*), et de la longueur de pas (*L_pas*) dudit individu.

**11.** Dispositif de mesure (PODO) selon la revendication 10, **caractérisé en ce que** le premier moyen de calcul (M2) est configuré pour calculer la fréquence de marche naturelle (*Fréq_naturelle*) selon la formule suivante :

$$Fréq\_naturelle = \frac{\sqrt{g \times N_{Fr} \times m \times DATA}}{L\_pas}$$

dans laquelle la variable g est la constante gravitationnelle, et la variable m est un nombre compris sensiblement entre 0,53 et 0,54.

12. Dispositif de mesure (PODO) selon l'une quelconque des revendications 10 ou 11, **caractérisé en ce que** le nombre de Froude $N_{Fr}$ est sensiblement égal à de l'ordre de 0,25.

13. Dispositif de mesure (PODO) selon l'une quelconque des revendications 10 à 12, **caractérisé en ce que** le module de calibration (100) comporte en outre un troisième moyen de calcul (M1) configuré pour calculer la longueur de pas (*L_pas*) dudit individu selon la formule suivante :

$$L\_pas = (0{,}4389 \pm \varepsilon 1) \times DATA + (0.0246 \pm \varepsilon 2)$$

dans laquelle $\varepsilon 1$ est un premier indice de tolérance, et $\varepsilon 2$ est un deuxième indice de tolérance.

14. Dispositif de mesure (PODO) selon la revendication 13, **caractérisé en ce que** le premier indice de tolérance $\varepsilon 1$ est sensiblement inférieur ou égal à 0,026 et le deuxième indice de tolérance $\varepsilon 2$ est sensiblement inférieur ou égal à 0,0588.

15. Dispositif de mesure (PODO) selon l'une quelconque des revendications 10 à 12, **caractérisé en ce que** le moyen de saisie (M0) est en outre configuré pour saisir la longueur de pas (*L_pas*).

16. Dispositif de mesure (PODO) selon l'une quelconque des revendications 10 à 15, **caractérisé en ce que** le deuxième moyen de calcul (M4) est configuré pour calculer l'estimation (*dist_est*) de la distance réellement parcourue par l'individu pendant la période de temps (*T*) selon la formule suivante :

$$dist\_est = Nb\_pas \times \left(L\_pas + (k \pm \varepsilon 3) \times \left[\frac{Nb\_pas}{T} - Fréq\_naturelle\right]\right)$$

dans laquelle *k* est un coefficient sensiblement égal à de l'ordre 0,251, et $\varepsilon 3$ est un troisième indice de tolérance.

17. Dispositif de mesure (PODO) selon la revendication 16, **caractérisé en ce que** le troisième indice de tolérance $\varepsilon 3$ est sensiblement inférieur ou égal à de l'ordre de 0,0025.

18. Dispositif de mesure (PODO) selon l'une quelconque des revendications 10 à 17, **caractérisé en ce qu'**il comporte un support d'enregistrement (CI) lisible par ledit dispositif de mesure (PODO) et sur lequel est enregistré un programme d'ordinateur (PG) comprenant des instructions pour l'exécution des étapes du procédé d'estimation selon l'une quelconque des revendications 1 à 8.

**Patentansprüche**

1. Verfahren zur Schätzung der Strecke, die durch eine Person mit einer Schrittlänge (*L_pas*) während eines Zeitraums (*T*) tatsächlich zurückgelegt wird, wobei das Verfahren durch eine Messvorrichtung (PODO) beispielsweise vom Typ Schrittzähler durchgeführt wird und einen Messschritt (S3) umfasst, der darin besteht, die Anzahl der Schritte (*Nb_pas*), die durch die Person während des Zeitraums (*T*) gemacht werden, zu messen, **dadurch gekennzeichnet, dass** es vor dem Messschritt (S3) umfasst:

- einen Erfassungsschritt (S0), der insbesondere darin besteht, wenigstens eine physiologische Angabe *(DATA)*, die eine bekannte Information bezüglich der Statur der Person umfasst, zu erfassen, und
- einen ersten Berechnungsschritt (S2), der darin besteht, die natürliche Lauffrequenz (*Fréq_naturelle*) der Person in Abhängigkeit insbesondere von der Froude-Zahl $N_{Fr}$ und von der physiologischen Angabe (*DATA*) zu berechnen,

und dass es ferner, im Anschluss an den Messschritt (S3), umfasst:

- einen zweiten Berechnungsschritt (S4), der darin besteht, eine Schätzung (*dist_est*) der durch die Person während des Zeitraums (*T*) tatsächlich zurückgelegten Strecke in Abhängigkeit insbesondere von der gemessenen Schrittzahl (*Nb_pas*), von der berechneten natürlichen Lauffrequenz (*Fréq_naturelle*) und von der Schrittlänge (*L_pas*) der Person zu berechnen.

**2.** Schätzungsverfahren nach Anspruch 1, **dadurch gekennzeichnet, dass** die natürliche Lauffrequenz (*Fréq_naturelle*), die während des ersten Berechnungsschrittes (S2) berechnet wird, durch die folgende Formel erhalten wird:

$$Fréq\_naturelle = \frac{\sqrt{g \times N_{Fr} \times m \times DATA}}{L\_pas}$$

worin die Variable g die Gravitationskonstante ist und die Variable m eine Zahl im Wesentlichen zwischen 0,53 und 0,54 ist.

**3.** Schätzungsverfahren nach einem der Ansprüche 1 oder 2, **dadurch gekennzeichnet, dass** die Froude-Zahl $N_{Fr}$ im Wesentlichen gleich in der Größenordnung von 0,25 ist.

**4.** Schätzungsverfahren nach einem der vorhergehenden Ansprüche, **dadurch gekennzeichnet, dass** es vor dem Messschritt (S3) einen Kalibrierschritt (S2) umfasst, der darin besteht, die Schrittlänge (*L_pas*) der Person nach der folgenden Formel zu berechnen:

$$L\_pas = (0{,}4389 \pm \varepsilon 1) \times DATA + (0.0246 \pm \varepsilon 2)$$

worin $\varepsilon 1$ eine erste Toleranzzahl ist und $\varepsilon 2$ eine zweite Toleranzzahl ist.

**5.** Schätzungsverfahren nach Anspruch 4, **dadurch gekennzeichnet, dass** die erste Toleranzzahl $\varepsilon 1$ im Wesentlichen kleiner als oder gleich 0,026 ist und die zweite Toleranzzahl $\varepsilon 2$ im Wesentlichen kleiner als oder gleich 0,0588 ist.

**6.** Schätzungsverfahren nach einem der Ansprüche 1 bis 3, **dadurch gekennzeichnet, dass** die Schrittlänge (*L_pas*) während des Erfassungsschrittes (S0) erfasst wird.

**7.** Schätzungsverfahren nach einem der vorhergehenden Ansprüche, **dadurch gekennzeichnet, dass** die Schätzung (*dist_est*) der durch die Person während des Zeitraums (*T*) tatsächlich zurückgelegten Strecke durch die folgende Formel erhalten wird:

$$dist\_est = Nb\_pas \times \left( L\_pas + (k \pm \varepsilon 3) \times \left[ \frac{Nb\_pas}{T} - Fréq\_naturelle \right] \right)$$

worin *k* ein Koeffizient im Wesentlichen gleich in der Größenordnung von 0,251 ist und $\varepsilon 3$ eine dritte Toleranzzahl ist.

**8.** Schätzungsverfahren nach Anspruch 7, **dadurch gekennzeichnet, dass** die dritte Toleranzzahl $\varepsilon 3$ im Wesentlichen kleiner als oder gleich in der Größenordnung von 0,0025 ist.

**9.** Aufzeichnungsträger (CI), der durch einen Computer oder auf einer Messvorrichtung (PODO) vom Typ Schrittzähler lesbar ist und auf dem ein Computerprogramm (PG), welches Befehle für die Ausführung der Schritte des Schätzungsverfahrens nach einem der Ansprüche 1 bis 8 umfasst, gespeichert ist.

**10.** Messvorrichtung (PODO), beispielsweise vom Typ Schrittzähler, die geeignet ist, die Strecke, die durch eine Person mit einer Schrittlänge (*L_pas*) während eines Zeitraums (*T*) tatsächlich zurückgelegt wird, zu schätzen, wobei die Messvorrichtung (PODO) ein Schätzmodul (200) umfasst, das ein Messmittel (M3) umfasst, welches dazu ausgelegt ist, die Anzahl der Schritte (*Nb*_pas), die durch die Person während des Zeitraums (*T*) gemacht werden, zu messen, **dadurch gekennzeichnet, dass** sie ein Kalibriermodul (100) umfasst, mit:

- einem Erfassungsmittel (M10), das insbesondere dazu ausgelegt ist, wenigstens eine physiologische Angabe (*DATA*), die eine Information bezüglich der Statur der Person umfasst, zu erfassen, und
- einem ersten Berechnungsmittel (M2), das dazu ausgelegt ist, die natürliche Lauffrequenz (*Fréq_naturelle*) der Person in Abhängigkeit insbesondere von der Froude-Zahl $N_{Fr}$ und von der physiologischen Angabe *(DATA)* zu berechnen,

und dass das Schätzmodul (200) ferner umfasst:

- ein zweites Berechnungsmittel (M4), das dazu ausgelegt ist, eine Schätzung (*dist_est*) der durch die Person während des Zeitraums (*T*) tatsächlich zurückgelegten Strecke in Abhängigkeit insbesondere von der gemessenen Schrittzahl (*Nb_pas*), von der berechneten natürlichen Lauffrequenz (*Fréq_naturelle*) und von der Schrittlänge *(L_pas)* der Person zu berechnen.

**11.** Messvorrichtung (PODO) nach Anspruch 10, **dadurch gekennzeichnet, dass** das erste Berechnungsmittel (M2) dazu ausgelegt ist, die natürliche Lauffrequenz (*Fréq_naturelle*) nach der folgenden Formel zu berechnen:

$$Fréq\_naturelle = \frac{\sqrt{g \times N_{Fr} \times m \times DATA}}{L\_pas}$$

worin die Variable *g* die Gravitationskonstante ist und die Variable *m* eine Zahl im Wesentlichen zwischen 0,53 und 0,54 ist.

**12.** Messvorrichtung (PODO) nach einem der Ansprüche 10 oder 11, **dadurch gekennzeichnet, dass** die Froude-Zahl $N_{Fr}$ im Wesentlichen gleich in der Größenordnung von 0,25 ist.

**13.** Messvorrichtung (PODO) nach einem der Ansprüche 10 bis 12, **dadurch gekennzeichnet, dass** das Kalibriermodul (100) ferner ein drittes Berechnungsmittel (M1) umfasst, das dazu ausgelegt ist, die Schrittlänge (*L_pas*) der Person nach der folgenden Formel zu berechnen:

$$L\_pas = (0{,}4389 \pm \varepsilon 1) \times DATA + (0.0246 \pm \varepsilon 2)$$

worin $\varepsilon 1$ eine erste Toleranzzahl ist und $\varepsilon 2$ eine zweite Toleranzzahl ist.

**14.** Messvorrichtung (PODO) nach Anspruch 13, **dadurch gekennzeichnet, dass** die erste Toleranzzahl $\varepsilon 1$ im Wesentlichen kleiner als oder gleich 0,026 ist und die zweite Toleranzzahl $\varepsilon 2$ im Wesentlichen kleiner als oder gleich 0,0588 ist.

**15.** Messvorrichtung (PODO) nach einem der Ansprüche 10 bis 12, **dadurch gekennzeichnet, dass** das Erfassungsmittel (M0) ferner dazu ausgelegt ist, die Schrittlänge (*L*_pas) zu erfassen.

**16.** Messvorrichtung (PODO) nach einem der Ansprüche 10 bis 15, **dadurch gekennzeichnet, dass** das zweite Berechnungsmittel (M4) dazu ausgelegt ist, die Schätzung (*dist_est*) der durch die Person während des Zeitraums (*T*) tatsächlich zurückgelegten Strecke nach der folgenden Formel zu berechnen:

$$dist\_est = Nb\_pas \times \left( L\_pas + (k \pm \varepsilon 3) \times \left[ \frac{Nb\_pas}{T} - Fréq\_naturelle \right] \right)$$

worin kein Koeffizient im Wesentlichen gleich in der Größenordnung von 0,251 ist und $\varepsilon 3$ eine dritte Toleranzzahl ist.

**17.** Messvorrichtung (PODO) nach Anspruch 16, **dadurch gekennzeichnet, dass** die dritte Toleranzzahl ε3 im Wesentlichen kleiner als oder gleich in der Größenordnung von 0,0025 ist.

**18.** Messvorrichtung (PODO) nach einem der Ansprüche 10 bis 17, **dadurch gekennzeichnet, dass** sie einen Aufzeichnungsträger (CI) umfasst, der durch die Messvorrichtung (PODO) lesbar ist und auf dem ein Computerprogramm (PG), welches Befehle für die Ausführung der Schritte des Schätzungsverfahrens nach einem der Ansprüche 1 bis 8 umfasst, gespeichert ist.

**Claims**

**1.** An estimation method for estimating the distance actually traveled by an individual having a step length (L_step) during a period of time (T), said method being performed by a measurement device (PODO), e.g. of the pedometer type, and including a measurement step (S3) consisting in measuring the number of steps (No_step) taken by said individual during the period of time (T), the method being **characterized in that**, prior to the measurement step (S3), it comprises:

  ■ an input step (S0) consisting in particular of inputting at least one physiological data item (DATA) comprising known information relating to the stature of said individual; and
  ■ a first calculation step (S2) consisting in calculating the natural walking frequency (Freq_nat) of said individual as a function in particular of the Froude number $N_{Fr}$ and the physiological data item (DATA);

and **in that**, after the measurement step (S3), it further comprises:

  · a second calculation step (S4) consisting in calculating an estimate (dist_est) of the distance actually traveled by said individual during the period of time (T) as a function in particular of the measured number of steps (No_step), of the calculated natural walking frequency (Freq_nat), and of the step length (L_step) of said individual.

**2.** An estimation method according to claim 1, **characterized in that** the natural walking frequency (Freq_nat) calculated during the first calculation step (S2) is obtained using the following formula:

$$\text{Freq\_nat} = \frac{\sqrt{g \times N_{Fr} \times m \times DATA}}{L\_step}$$

 where the variable g is the acceleration due to gravity, and the variable m is a number lying substantially in the range 0.53 to 0.54.

**3.** An estimation method according to claim 1 or claim 2, **characterized in that** the Froude number $N_{Fr}$ is substantially equal to about 0.25.

**4.** An estimation method according to any preceding claim, **characterized in that**, prior to the measurement step (S3), it comprises a calibration step (S2) consisting in calculating the step length (L_step) of the individual using the following formula:

$$\text{L\_step} = (0.4389 \pm \varepsilon 1) \times DATA + (0.0246 \pm \varepsilon 2)$$

where ε1 is a first tolerance index and ε2 is a second tolerance index.

**5.** An estimation method according to claim 4, **characterized in that** the first tolerance index ε1 is substantially less than or equal to 0.026 and the second tolerance index ε2 is substantially less than or equal to 0.0588.

**6.** An estimation method according to any one of claims 1 to 3, **characterized in that** the step length (L_step) is input during the input step (S0).

7. An estimation method according to any preceding claim, **characterized in that** the estimate (dist_est) of the distance actually traveled by said individual during the period of time (T) is obtained by the following formula:

$$\texttt{dist\_est=No\_step} \times \left( \texttt{L\_step+(k±}\varepsilon\texttt{3)} \times \left[ \frac{\texttt{No\_step}}{\texttt{T}} - \texttt{Freq\_nat} \right] \right)$$

where k is a coefficient substantially equal to about 0.251 and $\varepsilon$3 is a third tolerance index.

8. An estimation method according to claim 7, **characterized in that** the third tolerance index $\varepsilon$3 is substantially less than or equal to about 0.0025.

9. A data medium (CI) that is readable by a computer or by a pedometer type measurement device (PODO) and that has recorded therein a computer program (PG) including instructions for executing steps of the estimation method according to any one of claims 1 to 8.

10. A measurement device (PODO) e.g. of the pedometer type, suitable for estimating the distance actually traveled by an individual having a step length (L_step) during a period of time (T), said measurement device (PODO) including an estimation module (200) having measurement means (M3) configured to measure the number of steps (No_step) taken by said individual during the period of time (T), the device being **characterized in that** it includes a calibration module (100) comprising:

· input means (M0) configured in particular to input at least one physiological data item (DATA) comprising information relating to the stature of said individual; and
· first calculation means (M2) configured to calculate the natural walking frequency (Freq_nat) of said individual as a function in particular of the Froude number $N_{Fr}$ and the physiological data item (DATA);

and **in that** the estimation module (200) further comprises:

· second calculation means (M4) configured to calculate an estimate (dist_est) of the distance actually traveled by said individual during the period of time (T) as a function in particular of the measured number of steps (No_step), of the calculated natural walking frequency (Freq_nat), and of the step length (L_step) of said individual.

11. A measurement device (PODO) according to claim 10, **characterized in that** the first calculation means (M2) are configured to calculate the natural walking frequency (Freq_nat) using the following formula:

$$\texttt{Freq\_nat} = \frac{\sqrt{\texttt{g} \times \texttt{N}_{\texttt{Fr}} \times \texttt{m} \times \texttt{DATA}}}{\texttt{L\_step}}$$

where the variable g is the acceleration due to gravity, and the variable m is a number lying substantially in the range 0.53 to 0.54.

12. A measurement device (PODO) according to claim 10 or claim 11, **characterized in that** the Froude number $N_{Fr}$ is substantially equal to about 0.25.

13. A measurement device (PODO) according to any one of claims 10 to 12, **characterized in that** the calculation module (100) further comprises third calculation means (M1) configured to calculate the step length (L_step) of said individual using the following formula:

$$\texttt{L\_step} = \texttt{(0.4389} \pm \varepsilon\texttt{1)} \times \texttt{DATA} + \texttt{(0.0246} \pm \varepsilon\texttt{2)}$$

where $\varepsilon$1 is a first tolerance index and $\varepsilon$2 is a second tolerance index.

14. A measurement device (PODO) according to claim 13, **characterized in that** the first tolerance index ε1 is substantially less than or equal to 0.026 and the second tolerance index ε2 is substantially less than or equal to 0.0588.

15. A measurement device (PODO) according to any one of claims 10 to 12, **characterized in that** the input means (M0) are also configured to input the step length (L_step).

16. A measurement device (PODO) according to any one of claims 10 to 15, **characterized in that** the second calculation means (M4) are configured to calculate the estimate (dist_est) of the distance actually traveled by the individual during the period of time (T) using the following formula:

$$\mathrm{dist\_est=No\_step} \times \left( \mathrm{L\_step}+(k\pm\varepsilon3)\times\left[\frac{\mathrm{No\_step}}{\mathrm{T}}-\mathrm{Freq\_nat}\right]\right)$$

where k is a coefficient substantially equal to about 0.251 and ε3 is a third tolerance index.

17. A measurement device (PODO) according to claim 16, **characterized in that** the third tolerance index ε3 is substantially less than or equal to about 0.0025.

18. A measurement device (PODO) according to any one of claims 10 to 17, **characterized in that** it includes a data medium (CI) readable by said measurement device (PODO) and having recorded therein a computer program (PG) including instructions for executing steps of the estimation method according to any one of claims 1 to 8.

FIG.1

FIG.2

PG

**EP 2 656 010 B1**

**Documents brevets cités dans la description**

- JP 2008191046 B
- JP 2008191047 B
- WO 20050800917 A